Europäisches Patentamt

European Patent Office

Office européen des brevets

(19)

(11) EP 0 630 975 B1

## (12) EUROPÄISCHE PATENTSCHRIFT

(45) Veröffentlichungstag und Bekanntmachung des Hinweises auf die Patenterteilung:
**23.07.1997 Patentblatt 1997/30**

(51) Int Cl.$^6$: **C21B 13/00**

(21) Anmeldenummer: **94109230.6**

(22) Anmeldetag: **15.06.1994**

(54) **Verfahren zur Direktreduktion von Eisenoxide enthaltenden Stoffen**

Process for the direct reducing of material containing iron oxide

Procédé de réduction directe de matières contenant de l'oxyde de fer

(84) Benannte Vertragsstaaten:
**BE DE DK FR GB NL SE**

(30) Priorität: **19.06.1993 DE 4320359**
**24.03.1994 DE 4410093**

(43) Veröffentlichungstag der Anmeldung:
**28.12.1994 Patentblatt 1994/52**

(73) Patentinhaber: **METALLGESELLSCHAFT AG**
**60323 Frankfurt am Main (DE)**

(72) Erfinder:
- **Hirsch, Martin, Dr.**
  **D-61381 Friedrichsdorf (DE)**
- **Husain, Reze**
  **D-61169 Friedberg (DE)**
- **Saatci, Alpaydin, Dr.**
  **D-60386 Frankfurt am Main (DE)**
- **Bresser, Wolfgang**
  **D-63762 Grossostheim (DE)**

(56) Entgegenhaltungen:
EP-A- 0 196 359          EP-A- 0 543 757
WO-A-80/02652          WO-A-92/02646

**Beschreibung**

Die Erfindung betrifft ein Verfahren zur Direktreduktion von Eisenoxide enthaltenden Stoffen in Wirbelschichten mit Kreislaufführung von Reduktionsgas.

Bei der Direktreduktion von feinkörnigen, Eisenoxide enthaltenden Stoffen wie Eisenerze, Eisenerzkonzentrate oder Eisenoxide enthaltende Zwischenprodukte mittels reduzierender Gase in einer Wirbelschicht wird ein Eisenschwammprodukt (DRI) erzeugt, das pyrophore Eigenschaften aufweist und deshalb eine Nachbehandlung erfordert.

Es wurden auch Verfahren zur Direktreduktion solcher Stoffe zu Eisenschwamm und Aufkohlung zu $Fe_3C$ vorgeschlagen. Das $Fe_3C$-haltige Produkt ist nicht pyrophor und kann ohne Nachbehandlung gelagert und transportiert werden. Außerdem enthält es ausreichend Kohlenstoff für die Reduktion von restlichem Eisenoxid und zur Erzeugung von Wärme für das Einschmelzen des $Fe_3C$-haltigen Produktes.

Aus der DE-OS 27 00 427 und dem USA-Patent Nr. Re 32 247 ist ein Verfahren zur Erzeugung von $Fe_3C$ bekannt, bei dem feinkörniges Eisenoxid in einer klassischen Wirbelschicht zu $Fe_3C$ umgesetzt wird. Als Fluidisierungsgas wird ein heißes reduzierendes Gas in die Wirbelschicht geleitet. Das Fluidisierungsgas enthält $H_2$, CO, $CH_4$, $CO_2$, $N_2$ und $H_2O$. Vorzugsweise wird das Verhältnis zwischen $H_2$ und den kohlenstoffhaltigen Bestandteilen so eingestellt, daß der Wasserstoff die Reduktion zu metallischem Eisen und der Kohlenstoff die Aufkohlung zu $Fe_3C$ bewirkt, da in diesem Fall als gasförmiges Reaktionsprodukt nur Wasser anfällt, das aus dem Abgas durch Kondensation abgeschieden werden kann. Das Verhältnis von $H_2$ zu gebildetem Wasser wird zwischen 2,5 : 1 und 8 : 1 gehalten und die Verhältnisse von CO zu $CO_2$ und $H_2$ zu $H_2O$ werden im wesentlichen im Gleichgewicht mit $CH_4$ gehalten. Das Verhältnis von CO zu $CO_2$ soll vorzugsweise zwischen 1 : 1 bis 4 : 1 betragen. Die Abgase der Wirbelschicht enthalten 58,3 bis 77 % $H_2$, 0,5 % $N_2$, 5,2 bis 7,9 % $CH_4$, 8,9 bis 21,4 % CO, 2,0 bis 6,8 % $CO_2$, Rest Wasserdampf, wobei das $Fe_3C$-Produkt 4,35 bis 8,96 % C enthält. Die Temperatur in der Wirbelschicht soll zwischen 482 und 704°C liegen, wobei der Bereich zwischen 549 und 632°C besonders günstig ist. Das Abgas wird nach der Abkühlung in einem indirekten Wärmetauscher in einem Wäscher mit Wasser unter den Taupunkt des Wasserdampfes abgekühlt, wobei der Wasserdampfgehalt weitgehend auskondensiert und gleichzeitig Staub ausgewaschen wird. Das gereinigte Abgas wird in dem Wärmetauscher vorgewärmt, dann in einem Aufheizer weiter aufgeheizt und nach Aufstärkung durch Zugabe von reduzierenden Gasen im Kreislauf wieder als Fluidisierungsgas in den Wirbelschichtreaktor geleitet. Das $Fe_3C$-Produkt wird direkt in einen Ofen zur Stahlerzeugung chargiert, dessen Abgas zur Aufstärkung des Kreislaufgases verwendet wird. In einer klassischen Wirbelschicht erfolgt eine sehr schnelle Verteilung von frischem Material im Wirbelschichtbett. Dadurch enthält das ausgetragene Material immer einen Teil von unreagiertem oxidischem Material. Außerdem kann der Druckabfall vom Windkasten zum Wirbelbett unterschiedlich sein, sodaß eine ungleichmäßige Gasverteilung erfolgt.

Aus der US-PS 5,118,479 ist ein Verfahren bekannt, das die oben beschriebenen Nachteile der normalen klassischen Wirbelschicht vermeiden soll. Nach diesem Verfahren werden im Reaktor der klassischen Wirbelschicht senkrecht und parallel zueinander mehrere Bleche mit Abstand zueinander angeordnet. Jedes Blech ist alternierend an einem Ende mit der Wand des Reaktors verbunden und läßt am andern Ende einen Spalt zur Wand des Reaktors frei. Dadurch fließt das frisch aufgegebene Material labyrinthartig vom Eintrag zum Austrag. Das Fluidisierungsgas soll vorzugsweise (in Mol-%) enthalten: bis 20 %, vorzugsweise 5 bis 10 % CO; bis 20 %, vorzugsweise 2 bis 8 % $CO_2$; bis 80 %, vorzugsweise 35 bis 50 % $CH_4$; bis 80 %, vorzugsweise 35 bis 50 % $H_2$; 0 bis 15 %, vorzugsweise 0 bis 10 % $N_2$; bis 5 %, vorzugsweise 1 bis 2 % Wasserdampf. Die Reaktion erfolgt unter einem Druck von 1 bis 3,1 bar, vorzugsweise 1 bis 2,1 bar. Die Temperatur des eingeleiteten Fluidisierungsgases beträgt 500 bis 750°C, vorzugsweise 600 bis 700°C. Die Temperatur im Gasraum über dem Wirbelbett beträgt 500 bis 600°C, vorzugsweise 550 bis 600°C. Das $Fe_3C$-Produkt wird mit einer Temperatur von 490 bis 710°C, vorzugweise 550 bis 600°C, ausgetragen. Auch in einer klassischen Wirbelschicht mit den beschriebenen Einbauten herrschen schlechte Reaktionsbedingungen infolge der relativ geringen Geschwindigkeiten. Für eine große Durchsatzmenge ist ein Reaktor mit großem Durchmesser erforderlich, wodurch eine gleichmäßige Gasverteilung noch schwieriger wird.

Aus der WO 92/02646 ist es bekannt, mindestens einen Teil des frischen Materials vor der Aufgabe in die klassische Wirbelschicht in oxidierender Atmosphäre vorzuwärmen. Die Vorwärmung erfolgt auf 500 bis 900°C. Durch die Vorwärmung soll $Fe_3O_4$ wenigstens teilweise zu $Fe_2O_3$ oxidiert werden, Sulfidschwefel und Wasser entfernt und die Beschickung vorgewärmt werden. Die Reduktion und Aufkohlung des vorgewärmten Materials erfolgt in einer klassischen Wirbelschicht mit der vorstehend beschriebenen labyrinthartigen Führung des Materials.

Der Erfindung liegt die Aufgabe zugrunde, eine möglichst weitgehende Reduktion und Aufkohlung zu $Fe_3C$ in relativ geringer Zeit und wirtschaftlicher Weise zu ermöglichen. Eine weitere Aufgabe der Erfindung ist es, eine möglichst weitgehende Reduktion in relativ geringer Zeit und wirtschaftlicher Weise zu ermöglichen, wobei ein Produkt mit geringerem Kohlenstoffgehalt gegenüber $Fe_3C$ erhalten wird.

Die Lösung der Aufgabe erfolgt erfindungsgemäß dadurch, daß

a) in einer ersten Reduktionsstufe die Eisenoxide enthaltenden Stoffe in den Wirbelschichtreaktor eines zirkulierenden Wirbelschichtsystems chargiert werden, heißes Reduktionsgas als Fluidisierungsgas in den Wirbelschichtreaktor eingeleitet wird, eine Vorreduktion der Eisenoxide erfolgt, die aus dem Wirbelschichtreaktor ausgetragene Suspension im Rückführzyklon der zirkulierenden Wirbelschicht weitgehend von Feststoff befreit und der abgeschiedene Feststoff in den Wirbelschichtreaktor derart zurückgeleitet wird, daß innerhalb der zirkulierenden Wirbelschicht der stündliche Feststoffumlauf mindestens das Fünffache des im Wirbelschichtreaktor befindlichen Feststoffgewichts beträgt,

b) Feststoff aus der ersten Reduktionsstufe in einer zweiten Reduktionsstufe in eine klassische Wirbelschicht geleitet wird, heißes Reduktionsgas als Fluidisierungsgas in die klassische Wirbelschicht geleitet wird, der restliche Sauerstoff abgebaut und der Eisengehalt weitgehend in $Fe_3C$ überführt wird, das Abgas aus der klassischen Wirbelschicht als Sekundärgas in den Wirbelschichtreaktor gemäß (a) geleitet und aus der klassischen Wirbelschicht das $Fe_3C$ enthaltende Produkt abgezogen wird,

c) das Abgas aus dem Rückführzyklon gemäß (a) unter den Taupunkt abgekühlt und Wasser aus dem Abgas auskondensiert wird,

d) ein Teilstrom des Abgases abgeführt wird,

e) der restliche Teilstrom nach einer Aufstärkung durch Zugabe von reduzierendem Gas und Aufheizung als Kreislaufgas zum Teil als Fluidisierungsgas in den Wirbelschichtreaktor der ersten Reduktionsstufe gemäß (a) und zum Teil in die Wirbelschicht der zweiten Reduktionsstufe gemäß (b) geleitet wird.

Das System der zirkulierenden Wirbelschicht besteht aus einem Wirbelshichtreaktor, einem Abscheider zum Abscheiden von Feststoff aus der aus dem Wirbelschichtreaktor ausgetragenen Suspension - im allgemeinen einem Rückführzyklon - und einer Rückführleitung für den abgeschiedenen Feststoff in den Wirbelschichtreaktor. Das Prinzip der zirkulierenden Wirbelschicht zeichnet sich dadurch aus, daß im Unterschied zur "klassischen" Wirbelschicht, bei der eine dichte Phase durch einen deutlichen Dichtesprung von dem darüber befindlichen Gasraum getrennt ist, Verteilungszustände ohne definierte Grenzschicht vorliegen. Ein Dichtesprung zwischen dichter Phase und darüber befindlichem Staubraum ist nicht vorhanden, jedoch nimmt innerhalb des Reaktors die Feststoffkonzentration von unten nach oben ständig ab. Aus dem oberen Teil des Reaktors wird eine Gas-Feststoffsuspension ausgetragen. Bei der Definition von Betriebsbedingungen über die Kennzahlen von Froude und Archimedes ergeben sich folgende Bereiche:

$$0,1 \leq 3/4 \cdot Fr^2 \cdot \frac{\rho g}{\rho k - \rho g} \leq 10 \,,$$

bzw.

$$0,01 \leq Ar \leq 100 \,,$$

wobei

$$Ar = \frac{d_k^3 \cdot g \, (\rho k - \rho g)}{\rho g \cdot \nu^2}$$

und

$$Fr^2 = \frac{u^2}{g \cdot d_k}$$

sind.

Es bedeuten:

u die relative Gasgeschwindigkeit in m/sec.
Ar die Archimedes-Zahl
Fr die Froude-Zahl
$\rho g$ die Dichte des Gases in $kg/m^3$
$\rho k$ die Dichte des Feststoffteilchens in $kg/m^3$
$d_k$ den Durchmesser des kugelförmigen Teilchens in m
$\nu$ die kinematische Zähigkeit in $m^2/sec.$
g die Gravitationskonstante in $m/sec.^2$

Die Vorreduktion in der zirkulierenden Wirbelschicht erfolgt auf einen Reduktionsgrad von etwa 60 bis 90 %. In diesem Bereich wird der vom jeweiligen Reduktionsverhalten des Erzes abhängige optimale Wert in bezug auf die Ausnutzung des Reduktionsgases eingestellt, d.h., auf die jeweilige optimale Durchsatzleistung. Die Temperatur im Reaktor der zirkulierenden Wirbelschicht wird auf etwa 550 bis 650°C eingestellt.

Der Teil des Feststoffs, der aus der ersten Reduktionsstufe in die zweite Reduktionsstufe geleitet wird, kann aus der Rückführleitung der zirkulierenden Wirbelschicht oder aus dem Wirbelschichtreaktor der zirkulierenden Wirbelschicht entnommen werden. Die Aufgabe des Feststoffs in den Wirbelschichtreaktor erfolgt auf einer Seite, die der Seite des Abzuges des $Fe_3C$-Produktes gegenüberliegt. Die Überführung des Eisengehaltes des in die klassische Wirbelschicht chargierten Feststoffes in $Fe_3C$ erfolgt möglichst weitgehend. Sie liegt im allgemeinen zwischen 70 bis 95 %. Die Temperatur in der klassischen Wirbelschicht wird auf etwa 550 bis 650°C eingestellt. Das Abgas der klassischen Wirbelschicht wird als Sekundärgas in den Wirbelschichtreaktor der zirkulierenden Wirbelschicht in einer Höhe von bis 30 % der Höhe des Reaktors über dem Boden eingeleitet. Das Abgas aus dem Rückführzyklon der zirkulierenden Wirbelschicht wird soweit abgekühlt, daß der Wasserdampfgehalt im Gas auf unter etwa 1,5 % gesenkt wird. Die Kühlung erfolgt im allgemeinen in einem Wäscher unter Eindüsung von kaltem Wasser. Dabei wird gleichzeitig auch restlicher Staub aus dem Gas ausgewaschen. Das Volumen des Teilstroms des Abgases, der abgeführt wird, wird so eingestellt, daß im Kreislaufgas keine Anreicherung von Stickstoff eintritt, der mit dem Aufstärkungsgas eingebracht wird. Als Aufstärkungsgas wird im allgemeinen aus Erdgas hergestelltes $H_2$ und CO enthaltendes Gas verwendet. Das aufgestärkte Kreislaufgas wird wieder komprimiert, aufgeheizt und dann zum Teil in die erste und zum Teil in die zweite Reduktionsstufe geleitet. Der Feststoff kann vor der Aufgabe in den Wirbelschichtreaktor der zirkulierenden Wirbelschicht vorgewärmt werden. Dies geschieht unter oxidierenden Bedingungen. Wenn der Feststoff aus Magnetit ($Fe_3O_4$) besteht oder größere Mengen davon enthält, ist eine vorherige Oxidation zu Hämatit ($Fe_2O_3$) erforderlich.

Die Einstellung der Gaszusammensetzung erfolgt gemäß den eingangs erwähnten bekannten Verfahren.

Die Vorteile der Erfindung bestehen darin, daß der größere Teil der Reduktion in der zirkulierenden Wirbelschicht erfolgt, d.h. in einem Reaktor mit relativ kleinem Duchmesser und ohne Einbauten mit gleichmäßiger Strömung. Durch den sehr guten Stoff- und Wärmeaustausch in der zirkulierenden Wirbelschicht kann die Reaktion mit relativ kurzer Verweilzeit in einer kleinen Einheit durchgeführt werden. Die restliche Reduktion und die Aufkohlung, die eine längere Verweilzeit erfordern, erfolgt in der klassischen Wirbelschicht, die jedoch infolge der geringen restlichen Reaktion gegenüber einer vollständigen Reaktion in der klassischen Wirbelschicht wesentlich kleiner gehalten werden kann. Durch die erfindungsgemäße gas- und feststoffseitige Koppelung der beiden Wirbelschichten wird das Verfahren mit einer partiellen Gegenstromführung durchgeführt, wodurch ein höherer Gasumsatz bzw. ein geringerer Gasverbrauch erzielt wird.

Eine vorzugsweise Ausgestaltung besteht darin, daß 50 bis 80 % des Kreislaufgases als Fluidisierungsgas in die klassische Wirbelschicht der zweiten Reduktionsstufe gemäß (b) geleitet und das restliche Kreislaufgas als Fluidisierungsgas in den Wirbelschichtreaktor der zirkulierenden Wirbelschicht gemäß (a) geleitet werden. Dadurch erfolgt in der zweiten Reduktionsstufe ein hohes Angebot an frischem Reduktionsgas, und der im Abgas der zweiten Reduktionsstufe vorhandene Überschuß kann in der ersten Reduktionsstufe optimal ausgenutzt werden.

Eine vorzugsweise Ausgestaltung besteht darin, daß der Druck in der ersten Reduktionsstufe gemäß (a) und der zweiten Reduktionsstufe gemäß (b) so eingestellt wird, daß der Druck im oberen Teil des Wirbelschichtreaktors der zirkulierenden Wirbelschicht gemäß (a) 3 bis 6 bar beträgt. Das gesamte System der ersten und zweiten Reduktionsstufe steht dabei unter einem entsprechenden Druck, wobei der Druck des Gases vor dem Eintritt in die Wirbelschichten entsprechend höher ist. Dieser Druckbereich ergibt besonders günstige Ergebnisse, obwohl prinzipiell auch mit höherem Druck gearbeitet werden kann.

Eine vorzugsweise Ausgestaltung besteht darin, daß die klassische Wirbelschicht gemäß (b) in einem Reaktor mit rechteckigem Querschnitt mit einem Verhältnis von Länge zu Breite von mindestens 2 : 1 und quer angeordneten Überlauf-Wehren für den Feststoff angeordnet ist. Die Überlauf-Wehre sind parallel zu den Schmalseiten des Reaktors angeordnet. Sie erstrecken sich vom gasdurchlässigen Boden bis kurz unterhalb der Oberfläche des Wirbelbettes. Der Feststoff fließt von der Eintragsseite über die Wehre zur Austragsseite. Durch die schlanke und lange Form des Reaktors und die Überlauf-Wehre wird eine Rückvermischung von stärker reduziertem Feststoff mit weniger reduziertem Feststoff weitgehend vermieden, so daß eine sehr gute Endreduktion und Aufkohlung erzielt wird.

Eine Ausgestaltung besteht darin, daß die Eisenoxide enthaltenden Stoffe vor dem Einsatz in den Wirbelschichtreaktor der zirkulierenden Wirbelschicht gemäß (a) in einem oder mehreren Suspensions-Wärmeaustauschern mit dem Abgas der zirkulierenden Wirbelschicht vorreduziert werden. Das zur Vorreduktion verwendete Abgas wird nach dem Rückführzyklon vor der Kühlung unter den Taupunkt gemäß (c) entnommen. Diese Vorreduktion vor der eigentlichen Vorreduktion gemäß (a) ergibt eine noch bessere Ausnutzung des Reduktionsgases und damit höhere Durchsatzleistung.

Die Lösung der Aufgabe erfolgt erfindungsgemäß weiter dadurch, daß

a) in einer ersten Reduktionsstufe die Eisenoxide enthaltenden Stoffe in den Wirbelschichtreaktor eines zirkulierenden Wirbelschichtsystems chargiert werden, heißes Reduktionsgas als Fluidisierungsgas in den Wirbelschichtreaktor eingeleitet wird, eine Vorreduktion der Eisenoxide erfolgt, die aus dem Wirbelschichtreaktor ausgetragene Suspension im Rückführzyklon der zirkulierenden Wirbelschicht weitgehend von Feststoff befreit und der abgeschiedene Feststoff in den Wirbelschichtreaktor derart zurückgeleitet wird, daß innerhalb der zirkulierenden Wirbelschicht der stündliche Feststoffumlauf mindestens das Fünffache des im Wirbelschichtreaktor befindlichen Feststoffgewichts beträgt,

b) Feststoff aus der ersten Reduktionsstufe in einer zweiten Reduktionsstufe in eine klassische Wirbelschicht geleitet wird, heißes Reduktionsgas als Fluidisierungsgas in die klassische Wirbelschicht geleitet wird, der restliche Sauerstoff abgebaut und der Eisengehalt zu < 50 % in $Fe_3C$ überführt wird, das Abgas aus der klassischen Wirbelschicht als Sekundärgas in den Wirbelschichtreaktor gemäß (a) geleitet und aus der klassischen Wirbelschicht das Produkt abgezogen wird,

c) das Abgas aus dem Rückführzyklon gemäß (a) unter den Taupunkt abgekühlt und Wasser aus dem Abgas auskondensiert wird,

d) ein Teilstrom des Abgases abgeführt wird,

e) der restliche Teilstrom nach einer Aufstärkung durch Zugabe von reduzierendem Gas und Aufheizung als Kreislaufgas zum Teil als Fluidisierungsgas in den Wirbelschichtreaktor der ersten Reduktionsstufe gemäß (a) und zum Teil in die Wirbelschicht der zweiten Reduktionsstufe gemäß (b) geleitet wird.

Die Vorteile des erfindungsgemäßen Verfahrens liegen darin, daß der $H_2$-Gehalt im Reduktionsgas erhöht werden kann, wodurch geringere Kreislaufgasmengen für die Reduktion erforderlich sind. Gemäß diesem Verfahren kann die Verweilzeit in der zweiten Reduktionsstufe, die üblicherweise etwa neun Stunden beträgt, auf etwa fünf Stunden verringert werden. Aufgrund der geringeren Menge des Kreislaufgases wird auch die für die Kompression erforderliche Energie entspechend bis zu 50 % eingespart. Das nach der zweiten Reduktionsstufe erhaltene Produkt kann in brikettierter Form wie Schrott transportiert und chargiert werden. Aufgrund der geringeren Kohlenstoffmenge in dem erhaltenen Produkt, können größere Anteile, bis zu 100 % einer Gesamtcharge, im Elektrolichtbogenofen eingesetzt werden.

Eine vorzugsweise Ausgestaltung der Erfindung besteht darin, daß 50 bis 80 % des Kreislaufgases als Fluidisierungsgas in die klassische Wirbelschicht der zweiten Reduktionsstufe gemäß (b) geleitet und das restliche Kreislaufgas als Fluidisierungsgas in den Wirbelschichtreaktor der zirkulierenden Wirbelschicht gemäß (a) geleitet und die Fluidisierungsgase mit einem $H_2$-Gehalt von 85 bis 95 Vol.-% eingestellt werden. Dadurch erfolgt in der zweiten Reduktionsstufe ein hohes Angebot an frischem Reduktionsgas, und der im Abgas der zweiten Reduktionsstufe vorhandene Überschuß kann in der ersten Reduktionsstufe optimal ausgenutzt werden. Der Kohlenstoffgehalt in dem Produkt nach der zweiten Reduktionsstufe beträgt 0 bis 0,1 Gew.-%. Der Vorteil dieser erfindungsgemäßen Ausgestaltung liegt darin, daß noch höhere $H_2$-Gehalte und dadurch noch geringere Kreislaufgasmengen verwendet werden. Die Ausgestaltung führt zu einer weiteren Verringerung der Abmessungen der Reaktoren und erbringt eine weitere Einsparung für die elektrische Energie bei der Kompression der Kreislaufgase.

Eine vorzugsweise Ausgestaltung der Erfindung besteht darin, daß 50 bis 80 % des Kreislaufgases als Fluidisierungsgas in die klassische Wirbelschicht der zweiten Reduktionsstufe gemäß (b) geleitet und das restliche Kreislaufgas als Fluidisierungsgas in den Wirbelschichtreaktor der zirkulierenden Wirbelschicht gemäß (a) geleitet und die Fluidisierungsgase mit einem $H_2$-Gehalt von 50 bis 85 Vol.-% eingestellt werden. Nach dieser erfindungsgemäßen Ausgestaltung wird in wirtschaftlicher Weise, in geringer Zeit ein weitgehend reduziertes Produkt mit einem $Fe_3C$-Gehalt von < 50 % erhalten, das gut brikettiert und leicht transportiert werden kann.

Eine vorzugsweise Ausgestaltung der Erfindung besteht darin, daß die Fluidisierungsgase mit einem $H_2$-Gehalt von 50 bis 75 Vol.-% eingestellt werden. Mit diesen bevorzugten Maßnahmen wird ein Produkt erhalten, das besonders wirtschaftlich hergestellt und besonders gut brikettiert werden kann.

Eine vorzugsweise Ausgestaltung der Erfindung besteht darin, daß der Druck in der ersten Reduktionsstufe gemäß (a) und der zweiten Reduktionsstufe gemäß (b) so eingestellt wird, daß der Druck im oberen Teil des Wirbelschichtreaktors der zirkulierenden Wirbelschicht gemäß (a) 1,5 bis 6 bar beträgt. Das gesamte System der ersten und zweiten Reduktionsstufe steht dabei unter einem entsprechenden Druck, wobei der Druck des Gases vor dem Eintritt in die Wirbelschichten entsprechend höher ist. Dieser Druckbereich ergibt besonders günstige Ergebnisse, obwohl prinzipiell auch mit höherem Druck gearbeitet werden kann.

Eine vorzugsweise Ausgestaltung der Erfindung besteht darin, daß die klassische Wirbelschicht gemäß (b) in einem Reaktor mit rechteckigem Querschnitt mit einem Verhältnis von Länge zu Breite von mindestens 2 : 1 und quer angeordneten Überlauf-Wehren für den Feststoff angeordnet ist. Die Überlauf-Wehre sind parallel zu den Schmalseiten des Reaktors angeordnet. Sie erstrecken sich vom gasdurchlässigen Boden bis kurz unterhalb der Oberfläche des Wirbelbettes. Der Feststoff fließt von der Eintragsseite über die Wehre zur Austragsseite. Durch die schlanke und lange Form des Reaktors und die Überlauf-Wehre wird eine Rückvermischung von stärker reduziertem Feststoff mit weniger reduziertem Feststoff weitgehend vermieden, so daß eine sehr gute Endreduktion und Aufkohlung erzielt wird.

Eine Ausgestaltung der Erfindung besteht darin, daß die Eisenoxide enthaltenden Stoffe vor dem Einsatz in den Wirbelschichtreaktor der zirkulierenden Wirbelschicht gemäß (a) in einem oder mehreren Suspensions-Wärmeaustauschern vorgewärmt und/oder mit dem Abgas der zirkulierenden Wirbelschicht vorreduziert werden. Das zur Vorreduktion verwendete Abgas wird nach dem Rückführzyklon vor der Kühlung unter den Taupunkt gemäß (c) entnommen. Diese Vorreduktion vor der eigentlichen Vorreduktion gemäß (a) ergibt eine noch bessere Ausnutzung des Reduktionsgases und damit höhere Durchsatzleistung.

Eine bevorzugte Ausgestaltung der Erfindung besteht darin, daß das gemäß Verfahrensstufe (b) erhaltene Produkt brikettiert, vorzugsweise heiß brikettiert wird.

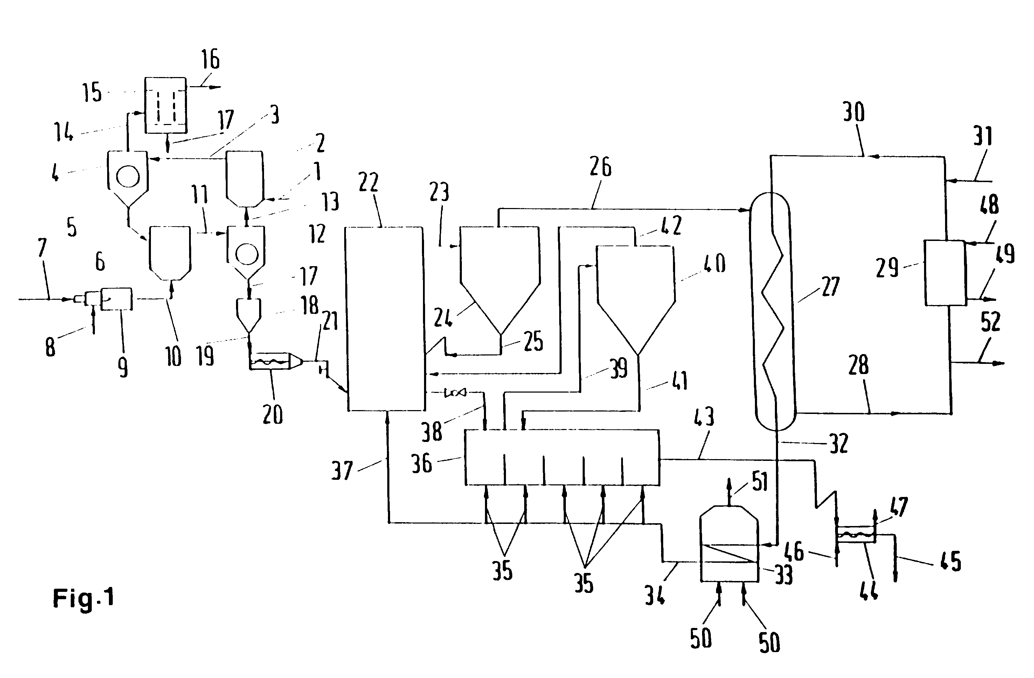

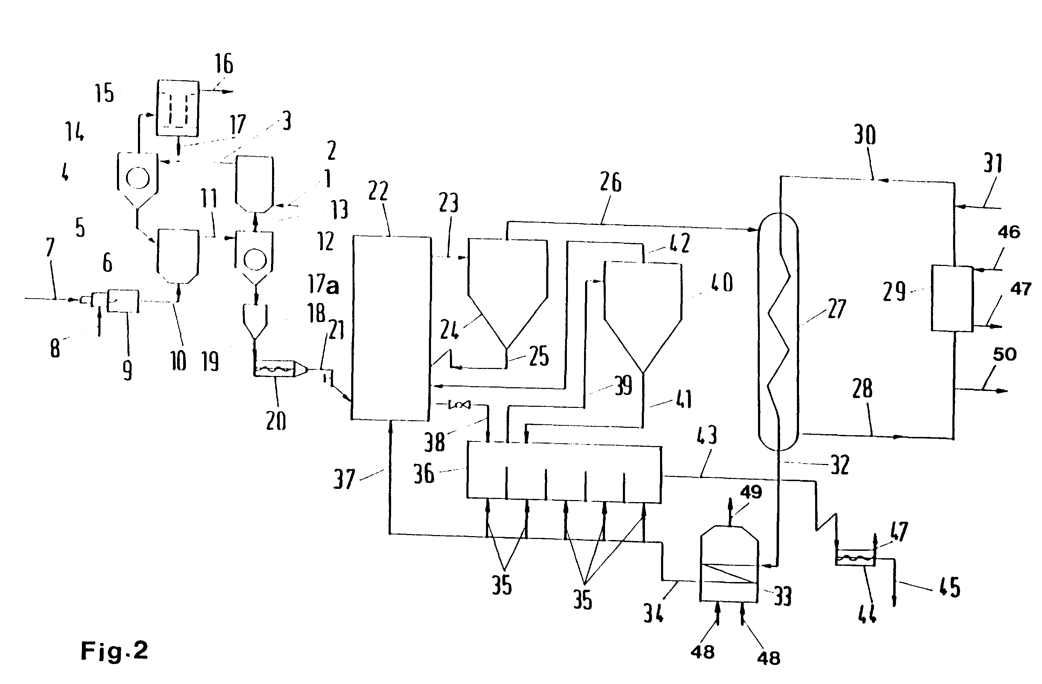

Die Erfindung wird anhand der Zeichnung und der Beispiele 1 und 2 näher erläutert.

Zeichnung

Figur 1

Über Leitung (1) wird das feinkörnige Erz in den Venturi-Vorwärmer (2) chargiert. Über Leitung (3) wird die Suspension in den Zyklon (4) geleitet, wo eine Trennung von Gas und Feststoff erfolgt. Der abgeschiedene Feststoff wird über Leitung (5) in den Venturi-Vorwärmer (6) geleitet. Über Leitung (7) wird Brennstoff und über Leitung (8) Verbrennungsluft in die Brennkammer (9) geleitet. Über Leitung (10) werden die heißen Verbrennungsgase in den Venturi-Vorwärmer (6) geleitet. Über Leitung (11) wird die Suspension in den Zyklon (12) geleitet, wo eine Trennung von Feststoff und Gas erfolgt. Das Gas wird über Leitung (13) in den Venturi-Vorwärmer (2) geleitet. Das Gas aus dem Zyklon (4) wird über Leitung (14) in ein Filter (15) geleitet, aus dem über Leitung (16) das gereinigte Gas abgeführt wird und über Leitung (17) der abgeschiedene Staub. Der im Zyklon (12) abgeschiedene Feststoff wird über Leitung (17) in den Bunker (18) geleitet, aus dem er über Leitung (19) in den Schneckenförderer (20) abgezogen und von dort über Leitung (21) in den Wirbelschichtreaktor (22) der zirkulierenden Wirbelschicht geleitet wird. Aus dem Wirbelschichtreaktor (22) wird über Leitung (23) die Gas-Feststoffsuspension in den Rückführzyklon (24) geleitet. Der abgeschiedene Feststoff wird über Leitung (25) in den Wirbelschichtreaktor (22) zurückgeleitet. Über Leitung (26) wird das Gas aus dem Rückführzyklon in den Wärmetauscher (27) geleitet. Das abgekühlte Gas wird über Leitung (28) in den Wäscher (29) geleitet, dort unter den Taupunkt des Wasserdampfes abgekühlt und der Wasserdampfgehalt weitgehend entfernt. Das gereinigte Gas wird übe Leitung (30) in den Wärmetauscher (27) geleitet. Über Leitung (31) wird reduzierendes Gas zur Aufstärkung zugemischt. Über Leitung (32) wird das vorgewärmte Reduktionsgas in den Aufheizer (33) geleitet und dort auf die für den Prozeß erforderliche Temperatur aufgeheizt. Das aufgeheizte Gas verläßt den Aufheizer (33) über Leitung (34) und wird zum Teil als Fluidisierungsgas über die Leitungen (35) in den Wirbelschichtreaktor (36) der klassischen Wirbelschicht geleitet und zum anderen Teil über Leitung (37) als Fluidisierungsgas in den Wirbelschichtreaktor (22) der zirkulierenden Wirbelschicht geleitet. Aus dem Wirbelschichtreaktor (22) der zirkulierenden Wirbelschicht wird über Leitung (38) Feststoff in den Wirbelschichtreaktor (36) der klassischen Wirbelschicht geleitet. Das staubhaltige Abgas aus dem Wirbelschichtreaktor (36) der klassischen Wirbelschicht wird über Leitung (39) in den Zyklon (40) geleitet. Der abgeschiedene Staub wird über Leitung (41) in den Wirbelschichtreaktor (36) zurückgeführt und das Gas wird über Leitung (42) als Sekundärgas in den Wirbelschichtreaktor (22) der zirkulierenden Wirbelschicht eingeleitet. Aus dem Wirbelschichtreaktor (36) der klassischen Wirbelschicht wird über Leitung (43) das $Fe_3C$-haltige Produkt in den Kühler (44) geleitet, dort abgekühlt und über Leitung (45) abgeführt. Über Leitung (46) wird Kühlwasser in den Kühler (44) geleitet und über Leitung (47) abgeführt. Über Leitung (48) wird Wasser in den Wäscher (29) geleitet und über Leitung (49) abgeführt. Über die Leitungen (50) werden Brennstoff und Verbrennungsluft in den Aufheizer (33) geleitet. Die Verbrennungsgase werden über Leitung (51) abgeführt. Über Leitung (52) wird ein Teilstrom aus dem Kreislaufgas entfernt, der eine Anreicherung von Stickstoff im Kreislaufgas verhindert.

Figur 2

Über Leitung (1) wird das feinkörnige Erz in den Venturi-Vorwärmer (2) chargiert. Über Leitung (3) wird die Suspension in den Zyklon (4) geleitet, wo eine Trennung von Gas und Feststoff erfolgt. Der abgeschiedene Feststoff wird über Leitung (5) in den Venturi-Vorwärmer (6) geleitet. Über Leitung (7) wird Brennstoff und über Leitung (8) Verbrennungsluft in die Brennkammer (9) geleitet. Über Leitung (10) werden die heißen Verbrennungsgase in den Venturi-Vorwärmer (6) geleitet. Über Leitung (11) wird die Suspension in den Zyklon (12) geleitet, wo eine Trennung von Feststoff und Gas erfolgt. Das Gas wird über Leitung (13) in den Venturi-Vorwärmer (2) geleitet. Das Gas aus dem Zyklon (4) wird über Leitung (14) in ein Filter (15) geleitet, aus dem über Leitung (16) das gereinigte Gas und über Leitung (17) der abgeschiedene Staub abgeführt wird. Der im Zyklon (12) abgeschiedene Feststoff wird über Leitung (17a) in den Bunker (18) geleitet, aus dem er über Leitung (19) in den Schneckenförderer (20) abgezogen und von dort über Leitung (21) in den Wirbelschichtreaktor (22) der zirkulierenden Wirbelschicht geleitet wird. Aus dem Wirbelschichtreaktor (22) wird über Leitung (23) die Gas-Feststoff-Suspension in den Rückführzyklon (24) geleitet. Der abgeschiedene Feststoff wird über Leitung (25) in den Wirbelschichtreaktor (22) zurückgeleitet. Über Leitung (26) wird das Gas aus dem Rückführzyklon in den Wärmetauscher (27) geleitet. Das abgekühlte Gas wird über Leitung (28) in den Wäscher (29) geleitet, dort unter den Taupunkt des Wasserdampfes abgekühlt und der Wasserdampfgehalt weitgehend entfernt. Das gereinigte Gas wird über Leitung (30) in den Wärmetauscher (27) geleitet. Über Leitung (31) wird reduzierendes Gas zur Aufstärkung zugemischt. Über Leitung (32) wird das vorgewärmte Reduktionsgas in den Aufheizer (33) geleitet und dort auf die für den Prozeß erforderliche Temperatur aufgeheizt. Das aufgeheizte Gas verläßt den Aufheizer (33) über Leitung (34) und wird zum Teil als Fluidisierungsgas über die Leitungen (35) in den Wirbelschichtreaktor (36) der klassischen Wirbelschicht geleitet und zum anderen Teil über Leitung (37) als Fluidisierungsgas in den Wirbelschichtreaktor (22) der zirkulierenden Wirbelschicht geleitet. Aus dem Wirbelschichtreaktor (22) der zirkulierenden Wirbelschicht wird über Leitung (38) Feststoff in den Wirbelschichtreaktor (36) der klassischen Wirbelschicht geleitet. Das staubhaltige Abgas aus dem Wirbelschichtreaktor (36) der klassischen Wirbelschicht wird über Leitung (39) in den Zyklon (40) geleitet. Der abgeschiedene Staub wird über Leitung (41) in den Wirbelschichtreaktor (36) zurückgeführt und das Gas wird über Leitung (42) als Sekundärgas in den Wirbelschichtreaktor (22) der zirkulierenden Wirbelschicht eingeleitet. Aus dem Wirbelschichtreaktor (36) der klassischen Wirbelschicht wird über Leitung (43) das Produkt in die Brikettieranlage (44) geleitet und dort brikettiert und über Leitung (45) abgeführt. Über Leitung (46) wird Wasser in den Wäscher (29) geleitet und über Leitung (47) abgeführt. Über die Leitungen (48) werden Brennstoff und Verbrennungsluft in den Aufheizer (33) geleitet. Die Verbrennungsgase werden über Leitung (49) abgeführt. Über Leitung (50) wird ein Teilstrom aus dem Kreislaufgas entfernt, der eine Anreicherung von Stickstoff im Kreislaufgas verhindert.

Beispiele

Beispiel 1

Über Leitung (1) wurden 61,2 t/h feuchtes Erz mit 7,8 % Feuchte dem Venturi-Vorwärmer (2) chargiert. Über Leitung (7) wurden 1 500 $Nm^3$/h Erdgas und über Leitung (8) 21 000 $Nm^3$/h Luft in die Brennkammer (9) geleitet. Im Filter (15) wurden über die Leitung (17) 2,6 t/h Staub abgetrennt. Über die Leitung (21) wurden 54,2 t/h auf 500°C vorgewärmtes Erz in den Wirbelschichtreaktor (22) der zirkulierenden Wirbelschicht (ZWS) geleitet. Der Druck am Austritt aus dem Wirbelschichtreaktor (22) betrug 4 bar. Die Reduktionstemperatur betrug 630°C. Der Wirbelschichtreaktor (22) hatte einen Durchmesser von 3 m.

Aus dem Wirbelschichtreaktor (22) wurden über Leitung (38) 40,6 t/h vorreduziertes Material mit 70 % Metallisierungsgrad in den Wirbelschichtreaktor (36) geleitet. Der Wirbelschichtreaktor (36) hatte eine Länge von 12 m und eine Breite von 4 m.

Aus dem Wirbelschichtreaktor (36) wurden über die Leitung (43) 36,8 t/h Produkt mit einem Metallisierungsgrad von 92 % in die Brikettieranlage (44) geleitet und dort brikettiert. Das Produkt hatte einen Kohlenstoffgehalt von 0,05 Gew.-%. Über die Leitung (26) wurden 182 000 $Nm^3$/h Abgas mit 79 % $H_2$, 12 % $H_2O$ und 9 % $N_2$ in den Wärmetauscher (27) geleitet und dort auf 120°C abgekühlt. Das abgekühlte Gas wurde in dem Wäscher (29) auf 28°C abgekühlt. Nach Zumischen von 23 000 $Nm^3$/h Frischgas mit einem $H_2$-Gehalt von 97 % über die Leitung (31) wurde das Gas mit einer Zusammensetzung von 91 % $H_2$, 0,6 % $H_2O$ und 8,4 % $N_2$ in den Wärmetauscher (27) geleitet und auf 520°C aufgeheizt. Nach weiterer Aufheizung im Aufheizer (33) wurden 70 % der Gase in den Reaktor (36) der klassischen Wirbelschicht als Fluidisierungsgas geleitet. Die restlichen 30 % der Gase wurden über die Leitung (37) als Fluidisierungsgas in den Reaktor (22) der zirkulierenden Wirbelschicht geleitet.

Beispiel 2

Über Leitung (1) wurden 61,2 t/h feuchtes Erz mit 7,8 % Feuchte dem Venturi-Vorwärmer (2) chargiert. Über Leitung (7) wurden 1 500 $Nm^3$/h Erdgas und über Leitung (8) 21 000 $Nm^3$/h Luft in die Brennkammer (9) geleitet. Im Filter (15) wurden über die Leitung (17) 2,6 t/h Staub abgetrennt. Über die Leitung (21) wurden 54,2 t/h auf 500°C vorgewärmtes Erz in den Wirbelschichtreaktor (22) der ZWS geleitet. Der Druck am Austritt aus dem Wirbelschichtreaktor (22) betrug 4 bar. Die Reduktionstemperatur betrug 630°C. Der Wirbelschichtreaktor (22) hat einen Durchmesser von 4 m.

Aus dem Wirbelschichtreaktor (22) wurden über Leitung (38) 40,6 t/h vorreduziertes Material mit 70 % Metallisierungsgrad in den Wirbelschichtreaktor (36) geleitet. Der Wirbelschichtreaktor (36) hatte eine Länge von 21 m und eine Breite von 4 m.

Aus dem Wirbelschichtreaktor (36) wurden über die Leitung (43) 37,6 t/h Produkt mit 63 % metallischem Eisen, 30 % $Fe_3C$ und 6 % $Fe_3O_4$ und Rest Gangart in die Brikettieranlage (44) geleitet und dort brikettiert. Das Produkt hatte einen Kohlenstoffgehalt von 2,0 Gew.-%. Über die Leitung (26) wurden 311 000 $Nm^3$/h Abgas mit 50 % $H_2$, 8 % $H_2O$, 9 % $N_2$, 31 % $CH_4$ und 2 % $CO$ + $CO_2$ in den Wärmetauscher (27) geleitet und dort auf 120°C abgekühlt. Das abgekühlte Gas wurde in dem Wäscher (29) auf 28°C abgekühlt. Nach Zumischen von 24 000 $Nm^3$/h Frischgas mit einem $H_2$-Gehalt von 90 %, 3 % $CH_4$, 4 % $CO$ und 3 % $H_2O$ über die Leitung (31), wurde das Gas mit einer Zusammensetzung von 57 % $H_2$, 0,6 % $H_2O$, 9 % $N_2$, 31 % $CH_4$ und 2,4 % $CO$ + $CO_2$ in den Wärmetauscher (27) geleitet und auf 520°C aufgeheizt. Nach weiterer Aufheizung im Aufheizer (33) wurden 70 % der Gase in den Reaktor (36) der klassischen Wirbelschicht als Fluidisierungsgas geleitet. Die restlichen 30 % der Gase wurden über die Leitung (37) als Fluidisierungsgas in den Reaktor (22) der zirkulierenden Wirbelschicht geleitet.

**Patentansprüche**

1. Verfahren zur Direktreduktion von Eisenoxide enthaltenden Stoffen zu Eisenschwamm und Aufkohlung zu $Fe_3C$ in einer Wirbelschicht mit Kreislaufführung von Reduktionsgas, wobei

a) in einer ersten Reduktionsstufe die Eisenoxide enthaltenden Stoffe in den Wirbelschichtreaktor eines zirkulierenden Wirbelschichtsystems chargiert werden, heißes Reduktionsgas als Fluidisierungsgas in den Wirbelschichtreaktor eingeleitet wird, eine Vorreduktion der Eisenoxide erfolgt, die aus dem Wirbelschichtreaktor ausgetragene Suspension im Rückführzyklon der zirkulierenden Wirbelschicht weitgehend von Feststoff befreit und der abgeschiedene Feststoff in den Wirbelschichtreaktor derart zurückgeleitet wird, daß innerhalb der zirkulierenden Wirbelschicht der stündliche Feststoffumlauf mindestens das Fünffache des im Wirbelschichtreaktor befindlichen Feststoffgewichts beträgt,

b) Feststoff aus der ersten Reduktionsstufe in einer zweiten Reduktionsstufe in eine klassische Wirbelschicht geleitet wird, heißes Reduktionsgas als Fluidisierungsgas in die klassische Wirbelschicht geleitet wird, der restliche Sauerstoff abgebaut und der Eisengehalt weitgehend in $Fe_3C$ überführt wird, das Abgas aus der klassischen Wirbelschicht als Sekundärgas in den Wirbelschichtreaktor gemäß (a) geleitet und aus der klassischen Wirbelschicht das $Fe_3C$ enthaltende Produkt abgezogen wird,

c) das Abgas aus dem Rückführzyklon gemäß (a) unter den Taupunkt abgekühlt und Wasser aus dem Abgas auskondensiert wird,

d) ein Teilstrom des Abgases abgeführt wird,

e) der restliche Teilstrom nach einer Aufstärkung durch Zugabe von reduzierendem Gas und Aufheizung als Kreislaufgas zum Teil als Fluidisierungsgas in den Wirbelschichtreaktor der ersten Reduktionsstufe gemäß (a) und zum Teil in die Wirbelschicht der zweiten Reduktionsstufe gemäß (b) geleitet wird.

2. Verfahren nach Anspruch 1, dadurch gekennzeichnet, daß 50 bis 80 % des Kreislaufgases als Fluidisierungsgas in die klassische Wirbelschicht der zweiten Reduktionsstufe gemäß (b) geleitet und das restliche Kreislaufgas als Fluidisierungsgas in den Wirbelschichtreaktor der zirkulierenden Wirbelschicht gemäß (a) geleitet werden.

3. Verfahren nach einem der Ansprüche 1 oder 2, dadurch gekennzeichnet, daß der Druck in der ersten Reduktionsstufe gemäß (a) und der zweiten Reduktionsstufe gemäß (b) so eingestellt wird, daß der Druck im oberen Teil des Wirbelschichtreaktors der zirkulierenden Wirbelschicht gemäß (a) 3 bis 6 bar beträgt.

4. Verfahren nach einem der Ansprüche 1 bis 3, dadurch gekennzeichnet, daß die klassische Wirbelschicht gemäß (b) in einem Reaktor mit rechteckigem Querschnitt mit einem Verhältnis von Länge zu Breite von mindestens 2 : 1 und quer angeordneten Überlauf-Wehren für den Feststoff angeordnet ist.

5. Verfahren nach einem der Ansprüche 1 bis 4, dadurch gekennzeichnet, daß die Eisenoxide enthaltenden Stoffe vor dem Einsatz in den Wirbelschichtreaktor der zirkulierenden Wirbelschicht gemäß (a) in einem oder mehreren Suspensions-Wärmeaustauschern mit dem Abgas der zirkulierenden Wirbelschicht vorreduziert werden.

6. Verfahren zur Direktreduktion von Eisenoxide enthaltenden Stoffen in Wirbelschichten mit Kreislaufführung von Reduktionsgas, wobei

a) in einer ersten Reduktionsstufe die Eisenoxide enthaltenden Stoffe in den Wirbelschichtreaktor eines zirkulierenden Wirbelschichtsystems chargiert werden, heißes Reduktionsgas als Fluidisierungsgas in den Wirbelschichtreaktor eingeleitet wird, eine Vorreduktion der Eisenoxide erfolgt, die aus dem Wirbelschichtreaktor ausgetragene Suspension im Rückführzyklon der zirkulierenden Wirbelschicht weitgehend von Feststoff befreit und der abgeschiedene Feststoff in den Wirbelschichtreaktor derart zurückgeleitet wird, daß innerhalb der zirkulierenden Wirbelschicht der stündliche Feststoffumlauf mindestens das Fünffache des im Wirbelschichtreaktor befindlichen Feststoffgewichts beträgt,

b) Feststoff aus der ersten Reduktionsstufe in einer zweiten Reduktionsstufe in eine klassische Wirbelschicht geleitet wird, heißes Reduktionsgas als Fluidisierungsgas in die klassische Wirbelschicht geleitet wird, der restliche Sauerstoff abgebaut und der Eisengehalt zu < 50 % in $Fe_3C$ überführt wird, das Abgas aus der klassischen Wirbelschicht als Sekundärgas in den Wirbelschichtreaktor gemäß (a) geleitet und aus der klassischen Wirbelschicht das Produkt abgezogen wird,

c) das Abgas aus dem Rückführzyklon gemäß (a) unter den Taupunkt abgekühlt und Wasser aus dem Abgas auskondensiert wird,

d) ein Teilstrom des Abgases abgeführt wird,

e) der restliche Teilstrom nach einer Aufstärkung durch Zugabe von reduzierendem Gas und Aufheizung als Kreislaufgas zum Teil als Fluidisierungsgas in den Wirbelschichtreaktor der ersten Reduktionsstufe gemäß (a) und zum Teil in die Wirbelschicht der zweiten Reduktionsstufe gemäß (b) geleitet wird.

**7.** Verfahren nach Anspruch 6, dadurch gekennzeichnet, daß 50 bis 80 % des Kreislaufgases als Fluidisierungsgas in die klassische Wirbelschicht der zweiten Reduktionsstufe gemäß (b) geleitet und das restliche Kreislaufgas als Fluidisierungsgas in den Wirbelschichtreaktor der zirkulierenden Wirbelschicht gemäß (a) geleitet und die Fluidisierungsgase mit einem $H_2$-Gehalt von 85 bis 95 Vol.-% eingestellt werden.

**8.** Verfahren nach Anspruch 6, dadurch gekennzeichnet, daß 50 bis 80 % des Kreislaufgases als Fluidisierungsgas in die klassische Wirbelschicht der zweiten Reduktionsstufe gemäß (b) geleitet und das restliche Kreislaufgas als Fluidisierungsgas in den Wirbelschichtreaktor der zirkulierenden Wirbelschicht gemäß (a) geleitet und die Fluidisierungsgase mit einem $H_2$-Gehalt von 50 bis 85 Vol.-% eingestellt werden.

**9.** Verfahren nach Anspruch 8, dadurch gekennzeichnet, daß die Fluidisierungsgase mit einem $H_2$-Gehalt von 50 bis 75 Vol.-% eingestellt werden.

**10.** Verfahren nach einem der Ansprüche 6 bis 9, dadurch gekennzeichnet, daß der Druck in der ersten Reduktionsstufe gemäß (a) und der zweiten Reduktionsstufe gemäß (b) so eingestellt wird, daß der Druck im oberen Teil des Wirbelschichtreaktors der zirkulierenden Wirbelschicht gemäß (a) 1,5 bis 6 bar beträgt.

**11.** Verfahren nach einem der Ansprüche 6 bis 10, dadurch gekennzeichnet, daß die klassische Wirbelschicht gemäß (b) in einem Reaktor mit rechteckigem Querschnitt mit einem Verhältnis von Länge zu Breite von mindestens 2 : 1 und quer angeordneten Überlauf-Wehren für den Feststoff angeordnet ist.

**12.** Verfahren nach einem der Ansprüche 6 bis 11, dadurch gekennzeichnet, daß die Eisenoxide enthaltenden Stoffe vor dem Einsatz in den Wirbelschichtreaktor der zirkulierenden Wirbelschicht gemäß (a) in einem oder mehreren Suspensions-Wärmeaustauschern vorgewärmt und/oder mit dem Abgas der zirkulierenden Wirbelschicht vorreduziert werden.

**13.** Verfahren nach den Ansprüchen 6 bis 12, dadurch gekennzeichnet, daß das gemäß Verfahrensstufe (b) erhaltene Produkt brikettiert, vorzugsweise heiß brikettiert wird.

## Claims

**1.** A method for the direct reduction of iron oxide-containing substances to sponge iron and carburisation to $Fe_3C$ in a fluidised bed with circulation of reduction gas, wherein

a) in a first reduction stage the iron oxide-containing substances are charged into the fluidised bed reactor of a circulating fluidised bed system, hot reduction gas as fluidising gas is introduced into the fluidised bed reactor, preliminary reduction of the iron oxides takes place, the suspension discharged from the fluidised bed reactor is largely freed of solids in the recycling cyclone of the circulating fluidised bed and the solids separated off are returned into the fluidised bed reactor such that within the circulating fluidised bed the circulation of solids per hour is at least five times the weight of solids located in the fluidised bed reactor,

b) solids from the first reduction stage in a second reduction stage are passed into a conventional fluidised bed, hot reduction gas as fluidising gas is passed into the conventional fluidised bed, the remaining oxygen is broken down and the iron content is largely converted into $Fe_3C$, the exhaust gas from the conventional fluidised bed is passed as secondary gas into the fluidised bed reactor according to (a) and the product containing $Fe_3C$ is withdrawn from the conventional fluidised bed,

c) the exhaust gas from the recycling cyclone according to (a) is cooled to below the dewpoint and water is condensed out of the exhaust gas,

d) a partial stream of the exhaust gas is removed,

e) the remaining partial stream, after fortification by the addition of reducing gas and heating as recycle gas is partly passed as fluidising gas into the fluidised bed reactor of the first reduction stage according to (a) and partly into the fluidised bed of the second reduction stage according to (b).

**2.** A method according to Claim 1, characterised in that 50 to 80% of the recycle gas is passed as fluidising gas into the conventional fluidised bed of the second reduction stage according to (b) and the rest of the recycle gas is passed as fluidising gas into the fluidised bed reactor of the circulating fluidised bed according to (a).

**3.** A method according to one of Claims 1 or 2,

characterised in that the pressure in the first reduction stage according to (a) and in the second reduction stage according to (b) is set such that the pressure in the upper part of the fluidised bed reactor of the circulating fluidised bed according to (a) is 3 to 6 bar.

4. A method according to one of Claims 1 to 3, characterised in that the conventional fluidised bed according to (b) is arranged in a reactor of rectangular cross-section having a ratio of length to width of at least 2 : 1 and transversely arranged overflow weirs for the solids.

5. A method according to one of Claims 1 to 4, characterised in that the iron oxide-containing substances before being charged into the fluidised bed reactor of the circulating fluidised bed according to (a) are pre-reduced in one or more suspension heat-exchangers with the exhaust gas of the circulating fluidised bed.

6. A method for the direct reduction of iron oxide-containing substances in fluidised beds with circulation of reduction gas, wherein

a) in a first reduction stage the iron oxide-containing substances are charged into the fluidised bed reactor of a circulating fluidised bed system, hot reduction gas as fluidising gas is introduced into the fluidised bed reactor, preliminary reduction of the iron oxides takes place, the suspension discharged from the fluidised bed reactor is largely freed of solids in the recycling cyclone of the circulating fluidised bed and the solids separated off are returned into the fluidised bed reactor such that within the circulating fluidised bed the circulation of solids per hour is at least five times the weight of solids located in the fluidised bed reactor,

b) solids from the first reduction stage in a second reduction stage are passed into a conventional fluidised bed, hot reduction gas as fluidising gas is passed into the conventional fluidised bed, the remaining oxygen is broken down and < 50% of the iron content is converted into $Fe_3C$, the exhaust gas from the conventional fluidised bed is passed as secondary gas into the fluidised bed reactor according to (a) and the product is withdrawn from the conventional fluidised bed,

c) the exhaust gas from the recycling cyclone according to (a) is cooled to below the dewpoint and water is condensed out of the exhaust gas,

d) a partial stream of the exhaust gas is removed,

e) the remaining partial stream, after fortification by the addition of reducing gas and heating as recycle gas is partly passed as fluidising gas into the fluidised bed reactor of the first reduction stage according to (a) and partly into the fluidised bed of the second reduction stage according to (b).

7. A method according to Claim 6, characterised in that 50 to 80% of the recycle gas is passed as fluidising gas into the conventional fluidised bed of the second reduction stage according to (b) and the rest of the recycle gas is passed as fluidising gas into the fluidised bed reactor of the circulating fluidised bed according to (a), and the fluidising gases are set with an $H_2$ content of 85 to 95% by volume.

8. A method according to Claim 6, characterised in that 50 to 80% of the recycle gas is passed as fluidising gas into the conventional fluidised bed of the second reduction stage according to (b) and the rest of the recycle gas is passed as fluidising gas into the fluidised bed reactor of the circulating fluidised bed according to (a), and the fluidising gases are set with an $H_2$ content of 50 to 85% by volume.

9. A method according to Claim 8, characterised in that the fluidising gases are set with an $H_2$ content of 50 to 75% by volume.

10. A method according to one of Claims 6 to 9, characterised in that the pressure in the first reduction stage according to (a) and in the second reduction stage according to (b) is set such that the pressure in the upper part of the fluidised bed reactor of the circulating fluidised bed according to (a) is 1.5 to 6 bar.

11. A method according to one of Claims 6 to 10, characterised in that the conventional fluidised bed according to (b) is arranged in a reactor of rectangular cross-section having a ratio of length to width of at least 2 : 1 and transversely arranged overflow weirs for the solids.

12. A method according to one of Claims 6 to 11, characterised in that the iron oxide-containing substances before being charged into the fluidised bed reactor of the circulating fluidised bed according to (a) are pre-reheated in one or more suspension heat-exchangers and/or are pre-reduced with the exhaust gas of the circulating fluidised bed.

13. A method according to Claims 6 to 12, characterised in that the product obtained according to method step (b) is briquetted, preferably hot briquetted.

## Revendications

1. Procédé de réduction directe en éponge de fer de matières contenant des oxydes de fer et de carburation en Fe$_3$C dans un lit fluidisé avec recirculation de gaz réducteur, dans lequel

   a) on charge, dans un premier stade de réduction, les substances renfermant des oxydes de fer dans le réacteur à lit fluidisé d'un système à lit fluidisé circulant, on envoie du gaz réducteur chaud, comme gaz de fluidisation, dans le réacteur à lit fluidisé, on effectue une pré-réduction des oxydes de fer, on débarrasse dans une grande mesure de la matière solide, dans un cyclone de recyclage du lit fluidisé circulant, la suspension déchargée du réacteur à lit fluidisé et on retourne la matière solide séparée au réacteur à lit fluidisé de manière qu'au sein du lit fluidisé circulant la circulation horaire de matières solides représente au moins cinq fois le poids de matière solide se trouvant dans le réacteur à lit fluidisé,
   b) on envoie de la matière solide provenant du premier stade de réduction dans un deuxième stade de réduction en lit fluidisé classique, on envoie du gaz réducteur chaud, comme gaz de fluidisation, au lit fluidisé classique, on supprime l'oxygène restant et on transforme la teneur en fer dans une grande mesure en Fe$_3$C, on envoie l'effluent gazeux du lit fluidisé classique, en tant que gaz secondaire, au réacteur à lit fluidisé suivant (a) et on soutire du lit fluidisé classique le produit renfermant du Fe$_3$C,
   c) on refroidit l'effluent gazeux du cyclone de recyclage suivant (a) en-dessous du point de rosée et on sépare par condensation de l'eau de l'effluent gazeux,
   d) on évacue un courant partiel de l'effluent gazeux,
   e) on envoie le courant partiel restant après l'avoir renforcé par addition de gaz réducteur et par chauffage, en tant que gaz circulant, en partie comme gaz de fluidisation au réacteur à lit fluidisé du premier stade de réduction suivant (a) et en partie dans le lit fluidisé du deuxième stade de réduction suivant (b).

2. Procédé suivant la revendication 1, caractérisé en ce que l'on envoie de 50 à 80 % du gaz circulant comme gaz de fluidisation dans le lit fluidisé classique du deuxième stade de réduction suivant (b) et le gaz circulant restant comme gaz de fluidisation dans le réacteur à lit fluidisé du lit fluidisé circulant suivant (a).

3. Procédé suivant l'une des revendications 1 ou 2, caractérisé en ce que l'on règle la pression dans le premier stade de réduction suivant (a) et dans le deuxième stade de réduction suivant (b) de façon que la pression dans la partie supérieure du réacteur à lit fluidisé et du lit fluidisé circulant suivant (a) soit de 3 à 6 bar.

4. Procédé suivant l'une des revendications 1 à 3, caractérisé en ce que le lit fluidisé classique suivant (b) est disposé dans un réacteur de section transversale rectangulaire ayant un rapport de la longueur à la largeur d'au moins 2:1 et un déversoir de débordement pour la matière solide disposé transversalement.

5. Procédé suivant l'une des revendications 1 à 4, caractérisé en ce que l'on réduit au préalable, par l'effluent gazeux du lit fluidisé circulant, les matières renfermant des oxydes de fer, avant l'entrée dans le réacteur à lit fluidisé du lit fluidisé circulant suivant (a), dans un échangeur de chaleur pour suspension ou dans plusieurs échangeurs de chaleur pour suspension .

6. Procédé de réduction directe de matières renfermant des oxydes de fer dans des lits fluidisés avec recirculation de gaz réducteur, qui consiste

   a) à charger, dans un premier stade de réduction, les matières renfermant des oxydes de fer dans le réacteur à lit fluidisé d'un système à lit fluidisé circulant, à envoyer du gaz réducteur chaud, comme gaz de fluidisation, dans le réacteur à lit fluidisé, à effectuer une réduction préalable des oxydes de fer, à débarrasser dans une grande mesure de la matière solide la suspension déchargée du réacteur à lit fluidisé, dans le cyclone de recyclage du lit fluidisé, circulant et à retourner la matière solide séparée au réacteur à lit fluidisé de façon qu'au sein du lit fluidisé circulant, la recirculation horaire de matière solide représente au moins cinq fois le poids de matière solide se trouvant dans le réacteur à lit fluidisé,
   b) à envoyer de la matière solide du premier stade de réduction dans un deuxième stade de réduction dans un lit fluidisé classique, à envoyer du gaz réducteur chaud, comme gaz de fluidisation, au lit fluidisé classique, à supprimer l'oxygène restant et à transformer la teneur en fer pour moins de 50 % en Fe$_3$C, à envoyer l'effluent gazeux du lit fluidisé classique, comme gaz secondaire, au réacteur à lit fluidisé suivant (a) et à soutirer le produit du lit fluidisé classique,
   c) à refroidir l'effluent gazeux du cyclone de recyclage suivant (a) en-dessous du point de rosée et à séparer de l'eau de l'effluent gazeux par condensation,

d) à évacuer un courant partiel de l'effluent gazeux,

e) à envoyer le courant partiel restant, après l'avoir renforcé par addition de gaz réducteur et par chauffage, en tant que gaz de circulation, en partie comme gaz de fluidisation dans le réacteur à lit fluidisé du premier stade de réduction suivant (a) et en partie dans le lit fluidisé du deuxième stade de réduction suivant (b).

7. Procédé suivant la revendication 6, caractérisé en ce qu'il consiste à envoyer de 50 à 80 % du gaz de circulation, comme gaz de fluidisation, au lit fluidisé classique du deuxième stade de réduction suivant (b) et à envoyer le gaz de circulation restant, comme gaz de fluidisation, au réacteur à lit fluidisé du lit fluidisé circulant suivant (a) et à régler les gaz de fluidisation à une teneur en $H_2$ de 85 à 95 % en volume.

8. Procédé suivant la revendication 6, caractérisé en ce qu'il consiste à envoyer de 50 à 80 % du gaz de circulation, comme gaz de fluidisation, dans le lit fluidisé classique du deuxième stade de réduction suivant (b) et à envoyer le gaz de circulation restant, comme gaz de fluidisation, dans le réacteur à lit fluidisé du lit fluidisé circulant suivant (a) et à régler les gaz de fluidisation à une teneur en $H_2$ de 50 à 85 % en volume.

9. Procédé suivant la revendication 8, caractérisé en ce qu'il consiste à régler les gaz de fluidisation à une teneur en $H_2$ de 50 à 75 % en volume.

10. Procédé suivant l'une des revendications 6 à 9, caractérisé en ce qu'il consiste à régler la pression dans le premier stade de réduction suivant (a) et dans le deuxième stade de réduction suivant (b) de façon que la pression à la partie supérieure du réacteur à lit fluidisé du lit fluidisé circulant suivant (a) soit de 1,5 à 6 bar.

11. Procédé suivant l'une des revendications 6 à 10, caractérisé en ce qu'il consiste à disposer le lit fluidisé classique suivant (b) dans un réacteur de section transversale rectangulaire ayant un rapport de la longueur à la largeur d'au moins 2:1 et ayant un déversoir de débordement de la matière solide disposé transversalement.

12. Procédé suivant l'une des revendications 6 à 11, caractérisé en ce qu'il consiste à préchauffer les matières contenant des oxydes de fer avant l'entrée dans le réacteur à lit fluidisé du lit fluidisé circulant suivant (a) dans un échangeur de chaleur pour suspension ou dans plusieurs échangeurs de chaleur pour suspension et/ou à les réduire au préalable par l'effluent gazeux du lit fluidisé circulant.

13. Procédé suivant les revendications 6 à 12, caractérisé en ce qu'il consiste à briqueter, de préférence à chaud, le produit obtenu au stade (b) du procédé.

Fig.1

Fig.2

EP 0 630 975 B1

14